# NEUE EUROPÄISCHE PATENTSCHRIFT

(11) **EP 1 079 155 B2**
(45) Veröffentlichungstag und Bekanntmachung des Hinweises auf die Entscheidung über den Einspruch: **29.10.2008**
(45) Hinweis auf die Patenterteilung: 09.04.2003
(21) Anmeldenummer: 00116096.9
(22) Anmeldetag: 27.07.2000
(51) Int. Cl.: F16J 15/12, F16J 15/08

(54) **Flachdichtung**
Flat gasket
Joint plat

(30) Priorität: 23.08.1999 DE 19939869
(43) Veröffentlichungstag der Anmeldung: 28.02.2001
(73) Patentinhaber: ElringKlinger AG, 72581 Dettingen (DE)
(72) Erfinder: Zerfass, Hans-Rainer, Dr., 65232 Taunusstein (DE); Anhorn, Thomas, 72581 Dettingen (DE); Schenk, Peter, 72531 Hohenstein (DE); Baur, Matthias, 72587 Römerstein (DE); Diez, Armin, 73252 Lenningen (DE); Winkovic, Victor, 65510 Idstein (DE)
(74) Vertreter: Haecker, Walter

(56) Entgegenhaltungen:
- DE-A- 2 849 018
- DE-A- 19 731 489
- DE-U- 29 914 716
- JP-A- 9 068 281
- JP-A- 9 229 196
- JP-A- 10 196 792
- JP-A- 10 292 865
- US-A- 4 140 323

## Beschreibung

Die Erfindung betrifft eine Flachdichtung, insbesondere eine Zylinderkopfdichtung, die eine mindestens eine Durchgangsöffnung aufweisende Dichtungsplatte besitzt, welche wenigstens eine Metallblechlage aufweist, die mit einer die Durchgangsöffnung umschließenden Sicke versehen ist, sowie mit einer dieser Sicke zugeordneten, eine übermäßige Sickenverformung verhindernden Stoppervorrichtung, welche zumindest im Wesentlichen aus einem elastomeren Material besteht, das in der von der Sicke gebildeten Vertiefung angeordnet ist und letztere mindestens über einen Teil ihrer Tiefe ausfüllt.

Bei Flachdichtungen, deren Dichtungsplatte von einer oder mehreren, aufeinandergeschichteten Metallblechlagen gebildet wird, dienen Durchgangsöffnungen umschließende Sicken in einer federelastische Eigenschaften aufweisenden Blechlage (üblicherweise aus Federstahlblech) der Abdichtung von Gasen oder Flüssigkeiten, indem eine solche Sicke einerseits mit dem Sickenkamm und andererseits mit den beiden sogenannten Sickenfüßen gegen eine andere Metallblechlage der Dichtungsplatte oder gegen gegeneinander abzudichtende Bauteile, wie Motorblock und Zylinderkopf, federnd angepreßt wird. Besonders bei Zylinderkopfdichtungen besteht dabei die Gefahr, daß sich im Laufe des Betriebs in der Sicke Risse bilden, weil sich die Weite des durch die Zylinderkopfdichtung abzudichtenden Dichtspalts zwischen Motorblock und Zylinderkopf im Motorbetrieb ständig ändert und infolgedessen eine solche Sicke ständig dynamisch beansprucht wird; um zu verhindern, daß eine solche Sicke beim Einbau der Dichtung und/oder im Betrieb zu stark verformt, d. h. abgeflacht wird, ordnet man der Sicke sogenannte Stopper bzw. Stoppervorrichtungen zu, die z. B. aus einem auf die gesickte Blechlage aufgeschweißten, der Sicke benachbarten Blechring bestehen, dessen Blechstärke deutlich geringer ist als die Höhe der unverformten, d. h. nicht beanspruchten Sicke - der Stopper verhindert dann eine übermäßige Sickenverformung und soll sicherstellen, daß die Sicke im Betrieb stets im elastischen Bereich verformt und beansprucht wird.

Nach der DE-38 02 090-C2 soll die Herstellung gesickter Metallblechlagen für Flachdichtungen, deren Metallblechlagen zur Verbesserung der Mikro- und Makroabdichtung (Sp. 1, Zeilen 21 und 22) ein- oder beidseitig mit einer elastomeren Beschichtung versehen sind, die nach dem Erzeugen der Sicken durch Aufspritzen aufgebracht und dann vulkanisiert wurde, dadurch vereinfacht werden, dass das Metallblech im Coil-Coating-Verfahren in der gewünschten geringen Stärke (Sp. 2, Zeilen 47 - 49) beschichtet und sodann die Beschichtung ausvulkanisiert wird (Sp. 1, Zeilen 55 - 68, und Sp. 2, Zeilen 1 - 4). Sodann werden aus dem beschichteten Blech die Metallblechlagen für die Flachdichtungen ausgestanzt und mit den Sicken versehen (Sp. 2, Zeilen 4 - 7). Das im Coil-Coating-Verfahren aufgebrachte Beschichtungsmaterial enthält unter anderem Fluorkautschuk, ein Peroxid, Triallylisocyanurat und einen mineralischen Füllstoff (Anspruch 1). In diesem Zusammenhang ergibt sich aus "KAUTSCHUK-TECHNOLOGIE" von Dr. Werner Hofmann, Gentner Verlag Stuttgart, 1980, dass bei Kautschukmaterialien Eigenschaften wie das Druckverformungsverhalten bei konstanter Mischungszusammensetzung lediglich durch unterschiedliche Vulkanisationsgrade verändert werden (letzter Absatz der Seite 249), und dass Peroxid als Vernetzungsmittel zu einem sehr niedrigen Druckverformungsrest - (Compression-Set)-Wert führt (vorletzter Absatz der Seite 251).

Es sind aber auch schon Stoppervorrichtungen der eingangs erwähnten Art in Form eines Gummirings bekannt geworden, welcher in die von der Sicke gebildete Vertiefung eingelegt ist und letztere vollständig ausfüllt (siehe Fig. 9 der DE-28 49 018-C); durch den Gummiring soll der Grad der Sickenabflachung beim Einbau der Dichtung verringert werden, und beim Dichtungseinbau aus der Sicke herausgequetschtes polymeres Material soll die Mikroabdichtung verbessern (da Gummi ein inkompressibles Material ist und die Sicke beim Einbau der Dichtung unvermeidlich etwas abgeflacht wird, wird beim Einbau der Dichtung auf alle Fälle ein Teil des Materials des Gummirings aus der Sicke herausgequetscht).

Eine ähnliche Stoppervorrichtung geht aus der EP-0 866 245-A hervor (siehe dort z. B. die Figuren 3, 5, 6 und 8 bis 13), wobei die Stopperfunktion von einem starren bzw. steifen, in der Sicke angeordneten Ring aus einem Harz (annular rigid resin layer) übernommen wird, welcher die von der Sicke gebildete Vertiefung über ungefähr die Hälfte ihrer Tiefe ausfüllt.

Bei Zylinderkopfdichtungen hat es sich jedoch gezeigt, daß im Motorbetrieb auch mit derartigen Stoppervorrichtungen auf eine Rißbildung zurückzuführende Sickenbrüche nicht dauerhaft verhindert werden können, vorausgesetzt, eine andere, weitere Stoppervorrichtung, z. B. in Form des vorstehend geschilderten Blechrings, ist nicht vorhanden - setzt man jedoch eine solche andere Stoppervorrichtung ein, erübrigt sich eine Füllung der Sicke mit elastomerem Material. Die in modernen Motoren häufig anzutreffenden beengten Platzverhältnisse für Zylinderkopfdichtungen lassen es aber oft angeraten erscheinen (oder erzwingen es sogar), auf einen neben der Sicke anzuordnenden Stopper zu verzichten.

Der Erfindung lag deshalb die Aufgabe zugrunde, eine Flachdichtung der eingangs erwähnten Art, wie sie beispielsweise aus der DE-28 49 018-C bekannt geworden ist, so zu verbessern, daß sich auch unter Verzicht auf eine weitere, andere Stoppervorrichtung die Dauerstandfestigkeit einer Sicke gegenüber dynamischen Beanspruchungen senkrecht zur Dichtungsplattenebene beträchtlich erhöhen läßt, und zwar auch beim Auftreten nicht nur ganz geringfügiger Sickenverformungen (Abflachungen).

Diese Aufgabe lässt sich erfindungsgemäß mit einer Flachdichtung gemäß Anspruch 1 lösen.

Bei ihren Bemühungen, diese Aufgabe zu lösen, haben die Erfinder völlig überraschend festgestellt, daß eine ganze oder teilweise Füllung der Sicke mit einem elastomeren Material dann zum Erfolg führt, wenn dieses unter Druck und Betriebstemperaturen (jedoch mindestens der Raumtemperatur entsprechenden Temperaturen) Fließeigenschaften (Fähigkeit zu einer plastischen Verformung) zeigt, welche erheblich über denjenigen voll vernetzter polymerer Materialien liegen.

Um die vorliegende Erfindung in der Praxis durch eine Messung der Materialeigenschaften gegenüber dem bekannten Stand der Technik abzugrenzen, kann insbesondere zu folgender Definition der Materialeigenschaften gegriffen werden:

Das elastomere Material soll bei einer mindestens der Raumtemperatur (21°C) entsprechenden Temperatur unter Druck derart plastisch verformbar sein, daß es mindestens das folgende Setzverhalten aufweist: Bei einer senkrechten Belastung eines kreisringförmigen Belastungsbereichs einer gleichförmigen, ebenen Schicht des elastomeren Materials mit einer anfänglichen Schichtdicke von ungefähr 24 µm, wobei der Belastungsbereich einen Außendurchmesser von 65,4 mm und einen Innendurchmesser von 64,6 mm aufweist und die Belastung 40 N pro mm² des Belastungsbereichs beträgt, beträgt bei 21°C die Schichtdicke des elastomeren Materials im Belastungsbereich nach einer Belastungsdauer von ungefähr 0,5 Stunden höchstens noch ca. 85 %, vorzugsweise noch ca. 83 bis ca. 37 %, der anfänglichen Schichtdicke.

Versuche an mit einer Sicke versehenen Federstahlblechen, deren von der Sicke gebildete Vertiefung im einen Fall mit einem nahezu vollständig vernetzten elastomeren Material und im anderen Fall mit einem elastomeren Material niederen Vernetzungsgrades vollständig gefüllt war, haben überraschenderweise ergeben, daß sich bei einer dynamischen Belastung, d. h. einer Belastung der Sicke mit einem sich zeitlich rasch ändernden Druck, so wie dies bei einer Zylinderkopfdichtung im Motorbetrieb der Fall ist, die Sicke um mehr als den doppelten Betrag abflachen läßt, ohne zu reißen, wenn das elastomere Material verhältnismäßig niederen Vernetzungsgrades verwendet wird (im Vergleich mit dem nahezu vollständig vernetzten elastomeren Material).

Elastomere Materialien, welche für die erfindungsgemäße Dichtung bevorzugt werden, weisen unter Druck derartige Fließeigenschaften auf, daß die Schichtdicke des elastomeren

Materials nach dem Aufbringen des Drucks zeitlich rasch abnimmt und sich schon nach ca. 0,2 Stunden kaum mehr verringert. Derartige bevorzugte elastomere Materialien zeigen insbesondere ein solches zeitliches Setzverhalten, daß nach einer Belastungsdauer von ungefähr 1 Stunde die Schichtdicke höchstens noch ca. 80 %, insbesondere noch ca. 80 % bis ca. 35 % der anfänglichen Schichtdicke beträgt.

Besonders vorteilhaft wirkt sich die Erfindung dann aus, wenn das elastomere Material bei noch nicht gepreßter Sicke deren Vertiefung nicht vollständig ausfüllt, sondern nur über einen solchen Teil ihrer Tiefe, daß bei eingebauter, jedoch noch nicht dynamisch belasteter Dichtung die von der entsprechend den stets fest vorgegebenen Montagekräften etwas abgeflachten Sicke gebildete Vertiefung durch das elastomere Material vollständig ausgefüllt wird.

Das elastomere Material kann nur im Sickenbereich auf die gesickte Blechlage aufgetragen werden, bevorzugt werden jedoch Ausführungsformen, bei denen die elastomere Füllung der Sicke Teil einer mindestens partiellen Beschichtung der Blechlage ist, welche sich auch zu beiden Seiten der Sicke erstreckt; die Blechlage kann also auch vollständig mit dem elastomeren Material beschichtet sein, und zwar nicht nur auf derjenigen Seite, auf der sich die von der Sicke gebildete Vertiefung befindet, sondern auch beidseitig.

Bei Zylinderkopfdichtungen mit einer ein- oder beidseitigen, partiellen oder vollflächigen Beschichtung der gesickten Blechlage liegt die mittlere Schichtstärke außerhalb der Sicke üblicherweise in der Größenordnung von 18 bis 28 µm, insbesondere von 20 bis 25 µm, und die Tiefe der unbelasteten Sicke in der Größenordnung von 100 bis 300 µm, insbesondere von ca. 150 µm. Für solche Fälle empfiehlt sich eine solche Schichtdicke des elastomeren Materials in der von der Sicke gebildeten Vertiefung, daß dort die maximale Schichtdicke in der Größenordnung von 35 bis 70 µm, vorzugsweise von 50 bis 60 µm, liegt. Erstreckt sich. eine Beschichtung der Blechlage mit dem elastomeren Material auch über zu beiden Seiten der Sicke liegende Bereiche der Blechlage, empfiehlt es sich generell, die Beschichtung so vorzunehmen, daß die maximale Schichtdicke des elastomeren Materials in der von der Sicke gebildeten Vertiefung ungefähr, das. 1,5- bis 3-fache der durchschnittlichen Schichtdicke außerhalb der Sicke beträgt, vor allem dann, wenn die durchschnittliche Schichtdicke des elastomeren Materials außerhalb der Sicke ungefähr 18 bis 28 µm und vorzugsweise ca. 23 bis 24 µm beträgt.

Bei der Herstellung von für Flachdichtungen vorgesehenen und partiell oder vollflächig mit einem elastomeren Material beschichteten Blechlagen wird üblicherweise ein Vormaterial verarbeitet, welches ein verflüchtigbares Lösungsmittel enthält und nach seiner Verfestigung das elastomere Beschichtungsmaterial bildet. Bekannte, auch für die Herstellung erfindungsgemäßer Dichtungen geeignete Auftragsverfahren für dieses Vormaterial sind Spritzen, Sprühen, Aufwalzen oder das Auftragen mit Hilfe des Siebdruckverfahrens. Da das aufgetragene Vormaterial vor seiner Verfestigung (Austreiben des Lösungsmittels und vollständiges oder, im Falle der vorliegenden Erfindung, partielles Vernetzen durch eine Temperaturbehandlung) noch verhältnismäßig niederviskos ist, wird für ein einfaches und kostengünstiges Verfahren zur Herstellung einer erfindungsgemäßen Flachdichtung vorgeschlagen, daß ein nach Fertigstellung der Dichtung das elastomere Material bildendes, ein verflüchtigbares Lösungsmittel enthaltendes Vormaterial auf die Blechlage so aufgetragen wird, daß das Vormaterial die von der Sicke gebildete Vertiefung zu einem höheren Grad ausfüllt als das elastomere Material der fertigen Dichtung, worauf das Lösungsmittel verflüchtigt wird; auf diese Weise läßt sich einfach erreichen, daß das elastomere Material die von der Sicke gebildete Vertiefung nicht vollständig ausfüllt, auch wenn, wie dies beispielsweise bei Anwendung des Siebdruckverfahrens der Fall ist, das Vormaterial die Sickenvertiefung zunächst vollständig ausfüllt. Wird das Vormaterial z. B. aufgespritzt oder aufgesprüht, kann man aber auch dessen zunächst noch verhältnismäßig geringe Viskosität ausnutzen, um in der Sickenvertiefung eine größere Schichtdicke zu erreichen; zu diesem Zweck wird empfohlen, das Verfahren so zu gestalten, daß das Vormaterial zunächst mit ungefähr gleichmäßiger Schichtdicke aufgetragen und das Lösungsmittel erst verflüchtigt wird, nachdem weiteres Vormaterial von Bereichen beidseits der Sicke in die von dieser gebildete Vertiefung geflossen ist.

Im folgenden soll die Erfindung noch näher erläutert werden, und zwar anhand einiger Beispiele sowie der beigefügten Zeichnungen, in denen folgendes dargestellt ist:
- Fig. 1: einen Schnitt durch einen mit Sicken versehenen Bereich einer mehrlagigen Dichtungsplatte einer noch nicht eingebauten, d. h. noch nicht belasteten erfindungsgemäßen Dichtungsplatte;
- Fig. 2: den in Fig. 1 dargestellten Schnitt, jedoch bei eingebauter, d. h. gepreßter Zylinderkopfdichtung, ohne daß diese bereits den im Motorbetrieb auftretenden Pressungsschwankungen unterworfen ist;
- Fig. 3: eine stark vergrößerte Schnittdarstellung eines mit einer Sicke versehenen Bereichs einer erfindungsgemäß beschichteten Metallblechlage einer Flachdichtung, und
- Fig. 4: ein Diagramm, welches das Setzverhalten (zeitliche Abnahme der ursprünglichen Schichtdicke des elastomeren Materials bei vorgegebener Druckbelastung) unterschiedlicher elastomerer Materialien darstellt.

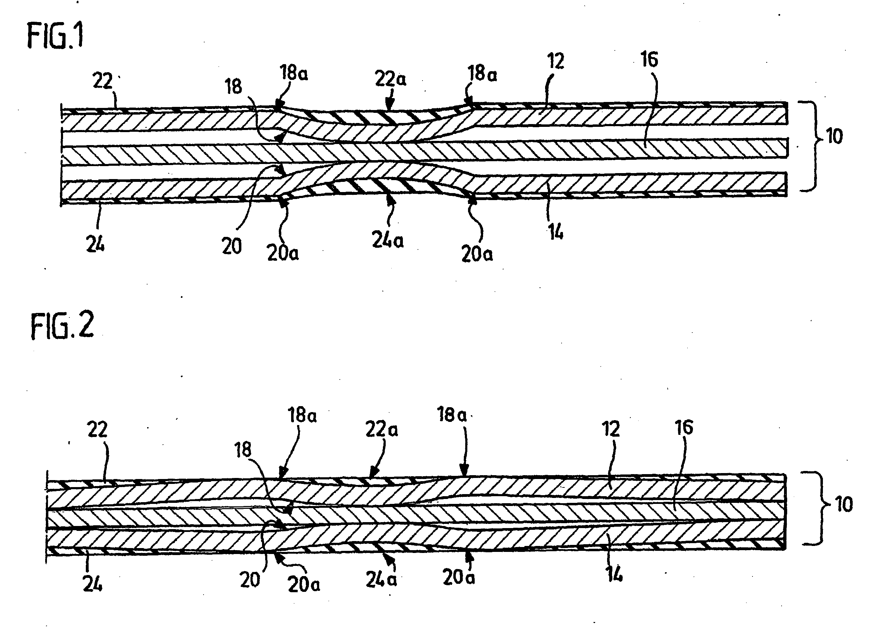

Die Fig. 1 zeigt im Querschnitt einen Bereich einer Dichtungsplatte 10 einer Zylinderkopfdichtung vor deren Einbau, d. h. im nicht gepreßten Zustand. Bei dieser Zylinderkopfdichtung handelt es sich um eine sogenannte Metallagendichtung, deren Dichtungsplatte mehrere aufeinandergeschichtete Blechlagen besitzt, bei der dargestellten Ausführungsform zwei äußere Blechlagen 12 und 14 sowie eine innere, mittlere Blechlage 16 - im folgenden werden die Lagen 12 und 14 als Außenlagen und die Lage 16 als Innenlage bezeichnet werden. Die beiden Außenlagen 12 und 14 sind jeweils mit einer sogenannten Vollsicke 18 bzw. 20 versehen, deren Querschnitt ungefähr einem flachen U entspricht und die als Dichtelement wirken soll; zu diesem Zweck müssen die Außenlagen 12 und 14 hinreichende federelastische Eigenschaften aufweisen, weshalb sie insbesondere aus Federstahlblech bestehen. Die Sicken 18 und 20 sollen eine nicht dargestellte Durchgangsöffnung der Dichtungsplatte 10, z. B. eine Brennraum-Durchgangsöffnung einer Zylinderkopfdichtung, ringförmig umschließen.

Auf den die beiden Hauptoberflächen der Dichtungsplatte 10 bildenden Außenseiten der Außenlagen 12 und 14 sind diese mit einer Beschichtung 22 bzw. 24 aus einem elastomeren Material versehen, und zwar insbesondere vollflächig, um z. B. eine Mikroabdichtung an den Dichtflächen von Zylinderkopf und Motorblock zu bewirken (Abdichtung von Poren und anderen Unregelmäßigkeiten der Dichtflächen), und um beim Einbau der Dichtung, vor allem aber im Motorbetrieb eine übermäßige Verformung (Abflachung) der Sicken 18 und 20 zu verhindern, welche zu einer Rißbildung in den Sicken führen könnte, sind die Sicken jeweils mit einer Stoppervorrichtung versehen, und zwar erfindungsgemäß in Gestalt eines Bereichs 22a bzw. 24a der Beschichtung 22 bzw. 24, welcher eine wesentlich größere Schichtdicke aufweist als die außerhalb der Sicken liegenden Bereiche der Beschichtungen 22 und 24. Wie die Fig. 1 erkennen läßt, füllen die Bereiche 22a und 24a erfindungsgemäß die von den Sicken 18 und 20 gebildeten Vertiefungen jedoch nicht so aus, daß sich vollständig ebene Hauptoberflächen der Dichtungsplatte 10 ergeben, sondern vielmehr geringfügige, ganz flache Mulden an den Oberseiten der Bereiche 22a und 24a.

Nachdem die Zylinderkopfdichtung eingebaut und die Zylinderkopfschrauben vorschriftsmäßig angezogen wurden, ergibt sich jedoch der in Fig. 2 dargestellte Zustand der Dichtungsplatte 10, in dem die beiden Hauptoberflächen der Dichtungsplatte zumindest nahezu vollständig eben sind, d. h. das elastomere Material füllt dann die von den beiden etwas abgeflachten Sicken 18 und 20 gebildeten Vertiefungen vollständig aus, und da erfindungsgemäß das elastomere Material unter Druck Fließeigenschaften aufweisen soll, fließt unter dem Einfluß der beim Einbau der Zylinderkopfdichtung auf diese aufgebrachten Druckkräfte das Beschichtungsmaterial im Bereich der sogenannten Sickenfüße 18a bzw. 20a zumindest weitgehend seitlich weg, so wie dies die Fig. 2 erkennen läßt.

In der fertigen Zylinderkopfdichtung soll das elastomere Material der Beschichtungen 22 und 24 unter Druck das vorstehend beschriebene Setzverhalten aufweisen, d. h. hinreichend plastisch verformbar sein.

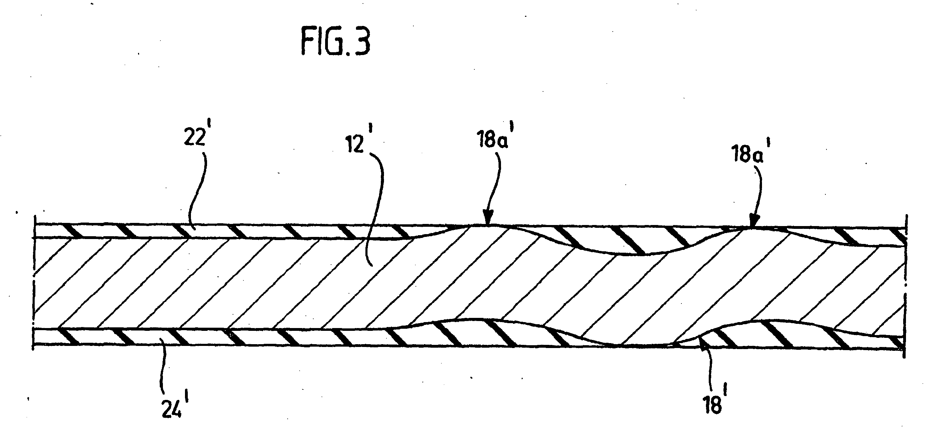

Die Fig. 3 zeigt einen stark vergrößerten Querschnitt eines mit einer Sicke versehenen Bereichs einer Federstahlblechlage, die beidseitig mit einer Beschichtung aus einem elastomeren Material mit erfindungsgemäßen Eigenschaften versehen ist und eine einlagige Flachdichtung oder eine Lage einer mehrlagigen Dichtung bilden kann. In Anlehnung an die Figuren 1 und 2 wurden die Metallage mit 12', die Beschichtung mit 22' bzw. 24', die Sicke mit 18' und die Sickenfüße mit 18a' bezeichnet, wobei die Fig. 3 denjenigen Zustand darstellen soll, welcher einige Zeit nach Einbau der Dichtung erreicht wird, jedoch vor einer dynamischen Druckbelastung.

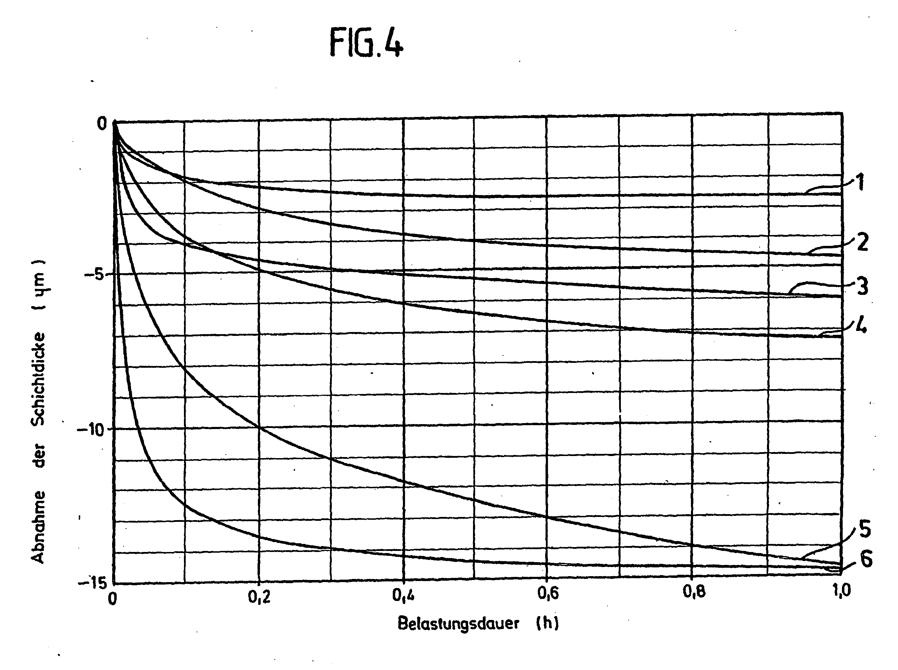

Das in Fig. 4 dargestellte Diagramm zeigt das typische Setzverhalten mehrerer, unterschiedlicher elastomerer Beschichtungsmaterialien, wobei über der Belastungsdauer als Abszisse die Abnahme der Schichtdicke, ausgehend von der anfänglichen Schichtdicke von beispielsweise 24 µm als Ordinate aufgezeichnet wurde.

In Fig. 4 wurde das Setzverhalten von 6 unterschiedlichen elastomeren Materialien dargestellt, und zwar mit den mit (1) bis (6) bezeichneten Kurven. Die Kurve (1) gehört zu einem elastomeren Material ohne nennenswertes Fließverhalten (unter Druck und bei Raumtemperatur, 21°C); bei diesem Material handelte es sich um ein weitgehend durchvernetztes elastomeres Material. Hingegen gehören die Kurven (2) bis (6) zu elastomeren Materialien mit erfindungsgemäßem Fließ- bzw. Setzverhalten, wobei die Fließfähigkeit des zur Kurve (3) gehörenden Materials größer ist als diejenige des zur Kurve (2) gehörenden Materials etc., d. h. das zur Kurve (6) gehörende Material fließt unter Druck am stärksten.

Wie bereits erwähnt, wurden die in Fig. 4 dargestellten Kurven beim Raumtemperatur (21°C) aufgenommen, und zwar unter Verwendung eines hohlzylindrischen Druckstempels mit einem Außendurchmesser von 65,4 mm, einem Innendurchmesser von 64,6 mm und ebener, senkrecht zur Zylinderachse verlaufender Stirnfläche, welche gegen eine elastomere Beschichtung eines ebenen Blechs angepreßt wurde, und zwar mit senkrecht zur Blechebene verlaufender Zylinderachse und einer solchen Druckkraft, daß sich im Bereich der kreisringförmigen Druckstempel-Stirnfläche eine zeitlich konstante spezifische Druckbelastung der Beschichtung von 40 Newton pro mm² ergibt.

Versuche mit 6 verschiedenen elastomeren Materialien, welche ein Fließ- bzw. Setzverhalten aufweisen, wie es die Kurven (1) bis (6) aus Fig. 4 darstellen, haben zu den im folgenden aufgeführten Ergebnissen geführt; bei diesen Versuchen wurden jeweils mit einer Sicke versehene Federstahlbleche mit dem jeweiligen elastomeren Material vollflächig beschichtet, wobei die anfängliche Schichtdicke außerhalb der Sicken ungefähr 24 µm betrug, die maximale Sickentiefe ca. 250 µm und die maximale Schichtdicke des elastomeren Materials in der von der Sicke gebildeten Vertiefung ca. 60 µm.

Die Sicke wurde jeweils dynamisch belastet, und zwar mit zeitlich variierenden Drücken von jeweils unterschiedlicher mittlerer Größe, wobei diejenige Abflachung der Sicke, d. h. dasjenige Maß der Verringerung der ursprünglichen Sickenhöhe gemessen wurde, bei dem die Sickenverformung zum Auftreten eines Risses in der Sicke führt.

Ohne eine Beschichtung mit elastomerem Material führte schon eine Verminderung der Sickenhöhe um 2,5 µm zur Rißbildung.

Bei einer Beschichtung mit einem elastomeren Material mit einem der Kurve (1) entsprechenden Fließverhalten führte eine Verminderung der Sickenhöhe um 3 µm zur Rißbildung, d. h. ein solches Material führt nicht zu einer nennenswerten Verbesserung.

Beschichtungen mit den Kurven (2) bis (4) entsprechendem Fließverhalten führten jedoch zu einer sprunghaften Verbesserung, da sich eine Rißbildung erst bei einer Verminderung der ursprünglichen Sickenhöhe um 7 µm (der Kurve (2) zuzuordnendes Material) bzw. 7,5 µm (den Kurven (3) und (4) zuzuordnende Materialien) ergab.

Im folgenden seien noch zwei Beispiele für das erfindungsgemäß einzusetzende elastomere Material beschrieben:

### Beispiel I

| | phr |
|---|---|
| Fluorkautschuk (Copolymer mit 66 % Fluor-Gehalt) | 100,00 |
| Ruß N990 | 15-45 |
| Magnesiumoxid (niedrig aktiv) | 5-15 |
| blockiertes Diamin | 1- 4 |

### Beispiel II

| | phr |
|---|---|
| Fluorkautschuk (quarternäres Polymer mit 67 % Fluor-Gehalt) | 100,00 |
| Ruß N990 | 10-40 |
| Zinkoxid | 2- 6 |
| TAIC | 1- 4 |
| Peroxid | 1- 4 |
| Hierin bedeuten (wie üblich): phr = pro 100 Teile Kautschuk (per hundred parts rubber) TAIC = Triallylisocyanurat | |

Die erfindungsgemäß gewünschten Fließeigenschaften des elastomeren Materials werden dabei unabhängig von der Rezeptur durch geeignete Vernetzungsbedingungen eingestellt, z. B. durch eine Wärmebehandlung bei 180°C bis 260°C während 1 bis 3 Minuten.

## Patentansprüche

1. Flachdichtung, insbesondere Zylinderkopfdichtung, die eine mindestens eine Durchgangsöffnung aufweisende Dichtungsplatte(10) besitzt, welche wenigstens eine Metallblechlage (12, 14) aufweist, die mit einer die Durchgangsöffnung umschließenden Sicke (18, 20) versehen ist, sowie mit einer dieser Sicke zugeordneten, eine übermäßige Sickenverformung verhindernden Stoppervorrichtung (22a, 24a), welche zumindest im wesentlichen aus einem elastomeren Material besteht, das in der von der Sicke gebildeten Vertiefung angeordnet ist und letztere mindestens über einen Teil ihrer Tiefe ausfüllt, **dadurch gekennzeichnet, daß** das in der Sicke (18, 20) angeordnete elastomere Material teilvernetzt ist, die einzige dieser Sicke zugeordnete Stoppervorrichtung (22a, 24a) bildet und bei einer mindestens der Raumtemperatur von 21°C entsprechenden Temperatur unter Druck derart plastisch verformbar ist, daß es mindestens das folgende Setzverhalten aufweist:
bei einer senkrechten Belastung eines kreisringförmigen Belastungsbereichs einer gleichförmigen, ebenen Schicht des elastomeren Materials mit einer anfänglichen mittleren Schichtdicke von 24 µm, wobei der Belastungsbereich einen Außendurchmesser von 65,4 mm und einen Innendurchmesser von 64,6 mm aufweist und die Belastung 40 N pro mm² des Belastungsbereichs beträgt, beträgt bei 21°C die Schichtdicke des elastomeren Materials im Belastungsbereich nach einer Belastungsdauer von 0,5 Stunden höchstens noch 85 % der anfänglichen Schichtdicke.

2. Flachdichtung nach Anspruch 1, **dadurch gekennzeichnet, daß** das Setzverhalten des elastomeren Materials derart ist, daß nach einer Belastungsdauer von 1 Stunde die Schichtdicke höchstens noch 80 % der anfänglichen . Schichtdicke beträgt.

3. Flachdichtung nach Anspruch 1, **dadurch gekennzeichnet, daß** das Setzverhalten des elastomeren Materials derart ist, daß nach einer Belastungsdauervon 0,5 Stunden die Schichtdicke noch 83 % bis 37 % der anfänglichen Schichtdicke beträgt.

4. Flachdichtung nach Anspruch 1, **dadurch gekennzeichnet, daß** das Setzverhalten des elastomeren Materials derart ist, daß nach einer Belastungsdauer von 1 Stunde die Schichtdicke noch. 80 % bis 35 % der anfänglichen Schichtdicke beträgt.

5. Flachdichtung nach Anspruch 1, **dadurch gekennzeichnet, daß** das elastomere Material die von der Sicke (18, 20) gebildete Vertiefung über einen solchen Teil ihrer Tiefe ausfüllt, daß bei eingebauter Dichtung und entsprechend abgeflachter Sicke deren Vertiefung vollständig ausgefüllt ist.

6. Flachdichtung nach Anspruch 1, **dadurch gekennzeichnet, daß** die elastomere Füllung (22a, 24a) der Sicke (18, 20) Teil einer mindestens partiellen Beschichtung (22, 24) der Blechlage (12, 14) ist, welche sich auch zu beiden Seiten der Sicke erstreckt.

7. Flachdichtung nach Anspruch 6, **dadurch gekennzeichnet, daß** die maximale Schichtdicke des elastomeren Materials in der von der Sicke (18, 20) gebildeten Vertiefung das 1,5- bis 3-fache der durchschnittlichen Schichtdicke außerhalb der Sicke beträgt.

8. Flachdichtung nach Anspruch 6, **dadurch gekennzeichnet, daß** die durchschnittliche Schichtdicke des elastomeren Materials außerhalb der Sicke (18, 20) 1 bis 28 µm beträgt.

9. Verfahren zur Herstellung einer Flachdichtung nach Anspruch 1, **dadurch gekennzeichnet, daß** ein nach Fertigstellung der Dichtung das elastomere Material bildendes, ein verflüchtigbares Lösungsmittel enthaltendes Vormaterial auf die Blechlage (12, 14) so aufgetragen wird, daß das Vormaterial die von der Sicke (18, 20) gebildete Vertiefung zu einem höheren Grad ausfüllt als das elastomere Material, der fertigen Dichtung, worauf das Lösungsmittel verflüchtigt wird.

10. Verfahren nach Anspruch 9, **dadurch gekennzeichnet, daß** das Vormaterial mit Hilfe einer der folgenden Methoden auf getragen wird: Aufsprühen; Aufspritzen, Aufwalzen und Auftragen im Siebdruckverfahren.

11. Verfahren nach Anspruch 10, **dadurch gekennzeichnet, daß** das Vormaterial mit gleichmäßiger Schichtdicke auf getragen und das Lösungsmittel erst verflüchtigt wird, nachdem Vormaterial von Bereichen beidseits der Sicke (18, 20) in die von dieser gebildete Vertiefung geflossen ist.

## Claims

1. Flat gasket, in particular a cylinder head gasket, comprising a gasket plate (10) having at least one aperture and at least one sheet-metal layer (12, 14) provided with a bead (18, 20) surrounding the aperture, and a stopper device (22a, 24a) assigned to this bead and preventing excessive bead deformation and consisting at least substantially of an elastomeric material arranged in the recess formed by the bead and filling the recess at least over part of the depth thereof, **characterized in that** the elastomeric material arranged in the bead (18, 20) is partially crosslinked, forms the only stopper device (22a, 24a) assigned to this bead and is plastically deformable under pressure at a temperature corresponding at least to the ambient temperature of 21°C in such a manner that it has at least the following set-down behaviour:
with a vertical pressure load on a circular annular pressure-load area of a uniform, flat layer of the elastomeric material having an initial average layer thickness of 24 µm, the pressure-load area having an outer diameter of 65.4 mm and an inner diameter of 64.6 mm, and the pressure load being 40 N per mm² of the pressure-load area, the layer thickness of the elastomeric material in the pressure-load area after a pressure-load duration of 0.5 hours at 21°C is at the most only 85% of the initial layer thickness.

2. Flat gasket as defined in claim 1, **characterized in that** the set-down behaviour of the elastomeric material is such that after a pressure-load duration of 1 hour the layer thickness is at the most only 80% of the initial layer thickness.

3. Flat gasket as defined in claim 1, **characterized in that** the set-down behaviour of the elastomeric material is such that after a pressure-load duration of 0.5 hours the layer thickness is only 83% to 37% of the initial layer thickness.

4. Flat gasket as defined in claim 1, **characterized in that** the set-down behaviour of the elastomeric material is such that after a pressure-load duration of 1 hour the layer thickness is only 80% to 35% of the initial layer thickness.

5. Flat gasket as defined in claim 1, **characterized in that** the elastomeric material fills the recess formed by the bead (18, 20) over such a part of its depth that with a gasket installed and a bead correspondingly flattened, its recess is completely filled.

6. Flat gasket as defined in claim 1, **characterized in that** the elastomeric filling (22a, 24a) of the bead (18, 20) is part of an at least partial coating (22, 24) of the sheet-metal layer (12, 14), which coating also extends on both sides of the bead.

7. Flat gasket as defined in claim 6, **characterized in that** the maximum layer thickness of the elastomeric material in the recess formed by the bead (18, 20) is 1.5 to 3 times the average layer thickness outside the bead.

8. Flat gasket as defined in claim 6, **characterized in that** the average layer thickness of the elastomeric material outside the bead (18, 20) is 18 to 28 µm.

9. Process for the production of a flat gasket as defined in claim 1, **characterized in that** a precursor material forming the elastomeric material in the finished gasket and containing an evaporatable solvent is applied to the sheet-metal layer (12, 14) such that the precursor material fills the recess formed by the bead (18, 20) to a greater degree than the elastomeric material of the finished gasket, whereupon the solvent is evaporated.

10. Process as defined in claim 9, **characterized in that** the precursor material is applied by one of the following methods: sprinkling on, spraying on, roller application and application by the screen printing method.

11. Process as defined in claim 10, **characterized in that** the precursor material is applied with a uniform layer thickness and the solvent is not evaporated until precursor material has flowed from areas on both sides of the bead (18, 20) into the recess formed by the latter.

## Revendications

1. Joint plat, en particulier joint de culasse qui possède une plaque d'étanchéité (10) présentant au moins une ouverture traversante et comprenant au moins une couche en tôle métallique (12, 14) qui est pourvue d'une moulure (18, 20) entourant l'ouverture traversante, ainsi qu'un dispositif d'arrêt (22a, 24a) associé à cette moulure empêchant une déformation excessive de la moulure, qui est constitué au moins essentiellement en matériau élastomère qui est agencé dans le renfoncement formé par la moulure et qui remplit cette dernière sur une partie au moins de sa profondeur, **caractérisé en ce que** le matériau élastomère agencé dans la moulure (18, 20) est partiellement réticulé, forme l'unique dispositif d'arrêt (22a, 24a) associé à cette moulure et est déformable plastiquement sous pression à une température correspondant au moins à la température ambiante de 21°C, de telle sorte qu'il présente au moins le comportement de tassement suivant:
lors d'une charge verticale sur une zone de charge circulaire d'une couche plane régulière du matériau élastomère présentant une épaisseur de couche initiale moyenne de 24 µm, la zone de charge présentant un diamètre extérieur de 65,4 mm et un diamètre intérieur de 64,6 mm et la charge s'élevant à 40 N par mm² de la zone de charge, l'épaisseur de couche du matériau élastomère s'élève, après une durée de charge maximale de 0,5 heure, à 21°C, encore à 85 % au maximum de l'épaisseur de couche initiale.

2. Joint plat selon la revendication 1, **caractérisé en ce que** le comportement de tassement du matériau élastomère est tel qu'après une durée de charge de 1 heure, l'épaisseur de couche s'élève au maximum encore à 80 % de l'épaisseur de couche initiale.

3. Joint plat selon la revendication 1, **caractérisé en ce que** le comportement de tassement du matériau élastomère est tel qu'après une durée de charge de 0,5 heure, l'épaisseur de couche est encore comprise entre 83 % et 37 % de l'épaisseur de couche initiale.

4. Joint plat selon la revendication 1, **caractérisé en ce que** le comportement de tassement du matériau élastomère est tel qu'après une durée de charge de 1 heure, l'épaisseur de couche est encore comprise entre 80 % et 35 % de l'épaisseur de couche initiale.

5. Joint plat selon la revendication 1, **caractérisé en ce que** le matériau élastomère remplit le renfoncement formé par la moulure (18, 20) sur une partie de sa profondeur, de telle sorte que, le joint étant monté et la moulure étant aplatie en correspondance, son renfoncement est rempli complètement.

6. Joint plat selon la revendication 1, **caractérisé en ce que** le remplissage élastomère (22a, 24a) de la moulure (18, 20) fait partie d'un revêtement au moins partiel (22, 24) de la couche de tôle (12, 14), lequel s'étend également vers les deux côtés de la moulure.

7. Joint plat selon la revendication 6, **caractérisé en ce que** l'épaisseur de couche maximale du matériau élastomère dans le renfoncement formé par la moulure (18, 20) est de 1,5 à 3 fois l'épaisseur de couche moyenne à l'extérieur de la moulure.

8. Joint plat selon la revendication 6, **caractérisé en ce que** l'épaisseur de couche moyenne du matériau élastomère à l'extérieur de la moulure (18,20) est de 18 à 28 µm.

9. Procédé pour réaliser un joint plat selon la revendication 1, **caractérisé en ce que** l'on dépose sur la couche de tôle (12, 14) un matériau précurseur formant le matériau élastomère et contenant un solvant volatile après finition du joint, de telle sorte que le matériau précurseur remplit le renfoncement formé par la moulure (18, 20) à un degré plus important que le matériau élastomère du joint fini, suite à quoi le solvant est volatilisé.

10. Procédé selon la revendication 9, **caractérisé en ce que** l'on dépose le matériau précurseur à l'aide de l'une des méthodes suivantes : pulvérisation, injection, laminage et déposition par sérigraphie.

11. Procédé selon la revendication 10, **caractérisé en ce que** l'on dépose le matériau précurseur sous une couche d'épaisseur régulière, et on fait volatiliser le solvant uniquement après que le matériau précurseur se soit écoulé depuis des zones des deux côtés de la moulure (18, 20) jusque dans le renfoncement formé par celle-ci.
